# EUROPÄISCHE PATENTANMELDUNG

(11) **EP 2 027 774 A1**
(43) Veröffentlichungstag der Anmeldung: **25.02.2009**
(21) Anmeldenummer: 08009175.4
(22) Anmeldetag: 19.05.2008
(51) Int. Cl.: A22C 11/00

(54) **Verfahren zum Zuführen eines Wurststranges zu einer Schneidemaschine**

(30) Priorität: 18.05.2007 DE 102007023535
(71) Anmelder: Stimpfl, Christof, 88267 Vogt (DE)
(72) Erfinder: Stimpfl, Christof, 88267 Vogt (DE)
(74) Vertreter: Weiss, Peter

(57) **Zusammenfassung**

Bei einem Verfahren zum Zuführen eines Wurststranges (1) zu einer Schneidemaschine (2), in welcher der Wurststrang (1) in einzelne Würste aufgeteilt wird, soll der Wurststrang (1) in eine Zufuhrrinne (7) eingelegt und bevorzugt die erste Wurst (39) von einer Einrichtung (5) ergriffen und Transportelementen (40) der Schneidemaschine (2) zugeführt werden.

## Beschreibung

Die vorliegende Erfindung betrifft ein Verfahren zum Zuführen eines Wurststranges zu einer Schneidemaschine, in welcher der Wurststrang in einzelne Würste aufgeteilt wird sowie eine Vorrichtung hierfür.

### Stand der Technik

Derartige Verfahren und Vorrichtungen sind bereits in vielfältiger Form und Ausführung bekannt und gebräuchlich. So wird beispielsweise in der DE 102 52 876 A1 ein Handlingsystem für Wurst beschrieben. Hierbei ist den an Rauchstöcken hängenden Wurststrängen eine Handlingeinrichtung mit einer Greifeinrichtung sowie einer Schneideinrichtung zugeordnet. Die Schneideinrichtung ist dabei an Führungsschienen quer verfahrbar und fährt die Wurststränge an, um diese von den Rauchstöcken abzuschneiden.

Des weiteren wird in der DE 10 2004 039 375 A1 ein Verfahren und eine Vorrichtung zum Be- und/oder Entladen eines Speichers, insbesondere von Rauchwägen beschrieben, in denen Würste mittels Fäden an Stöcken aufgehängt werden, wobei bevorzugt mehrere Stöcke mit Würsten von Greifarmen erfasst und in den Speicher eingesetzt oder aus dem Speicher entnommen und einer Schneideinrichtung zugeführt werden. Eine derartige Schneideinrichtung wird auch in der DE 43 07 637 A1 oder DE 43 18 301 A1 beschrieben.

In der DE 10 2005 051 404 A1 hingegen wird eine Vorrichtung zum Trennen von miteinander verbundenen Würsten an einer Stange, über welche die Würste mit ihren Verbindungen aufgehängt sind, beschrieben, wobei das Trennen mittels einer Schneideinrichtung geschieht, die entlang der Stange mit den aufgehängte Würsten führbar ist. Hierzu ist in der Schneideinrichtung ein Messer vorgesehen, welches auf der Stange abrollt.

Nachteilig bei den oben genannten Vorrichtungen ist, dass diese oftmals einen komplizierten Aufbau und/oder eine umständliche Handhabung erfordern.

### Aufgabe

Aufgabe der vorliegenden Erfindung ist es, die oben genannten Nachteile zu beseitigen und ein Verfahren bzw. eine Vorrichtung zu schaffen, mit welchem/r der Transport von Würsten bzw. Wurststrängen, die insbesondere an einem Rauchstock hängen, zu nachfolgenden Bearbeitungsstationen vereinfacht werden. Gleichzeitig soll die entsprechende Vorrichtung einen einfachen Aufbau aufweisen und leicht zu bedienen sein.

### Lösung der Aufgabe

Zur Lösung der Aufgabe führt, dass der Wurststrang in eine Zufuhrrinne eingelegt und bevorzugt die erste Wurst von einer Einrichtung ergriffen und Transportelementen der Schneidemaschine zugeführt wird.

Die Zufuhrrinne ist Teil einer Zufuhreinrichtung und ist querschnittlich bevorzugt V-förmig ausgestaltet und einem Gleitboden aufgesetzt. Durch die V-förmige Ausgestaltung der Zufuhrrinne ist es möglich, vor allem die erste Wurst, welche später durch die Einrichtung ergriffen werden soll, etwa vertikal aufgerichtet anzuordnen, wenn der Wurststrang an einem Rauchstock in die Zufuhrrinne eingelegt wird. Gleichzeitig wird durch die Ausgestaltung jedoch verhindert, dass die Wurst bzw. der Wurststrang in sich umfällt bzw. verrutscht, was zur Folge hätte, dass die Einrichtung die erste Wurst nicht mehr richtig ansaugen kann. Gleichwohl ist jedwede Form und Ausgestaltung für die Zufuhrrinne denkbar, welche gewährleistet, dass die erste Wurst in geeigneter Weise von der Einrichtung erfasst werden kann. Die unterschiedlichen Möglichkeiten der Form und Ausgestaltung der Zufuhrrinne sollen von der vorliegenden Erfindung umfasst sein.

Ebenfalls ist denkbar, die Zufuhrrinne nicht, wie vorliegend gezeigt, einem separaten Gleitboden aufzusetzen, sondern einstückig mit einem eigenen Gleitboden bzw. einem Boden, welcher das Gleiten des Wurststranges ermöglicht, auszubilden. Auch diese Möglichkeit soll von der vorliegenden Erfindung umfasst sein.

Um das Gleiten des Wurststranges in der Zufuhrrinne weiter zu erleichtern, ist die Zufuhrrinne um eine bevorzugt aussermittig angeordnete Drehachse drehbar angeordnet. Das Drehen der Zufuhrrinne um diese Drehachse ist insbesondere dann erwünscht, wenn bereits ein Grossteil des Wurststranges von Transportelementen der Schneidemaschine aufgenommen wurde und sich nur noch einige Würste des Wurststranges in der Zufuhrrinne befinden; welche nun vollends aus der Zufuhrrinne gleiten sollen.

Der Gleitboden und die Zufuhrrinne sind lösbar über Lagerbolzen in bevorzugt zwei Halteschienen gelagert, welche den Gleitboden mit der darauf aufgesetzten Zufuhrrinne U-förmig umfangen. Selbstverständlich ist es denkbar und soll von der vorliegenden Erfindung umfasst sein, mehr als zwei Halteschienen oder auch nur eine oder keine Halteschiene vorzusehen. Bei mehreren Halteschienen ist die Drehachse bevorzugt unterhalb derjenigen Halteschiene angeordnet, welche sich in nächster Nähe zu den Transportelementen der Schneidemaschine befindet. Sollte nur eine Halteschiene vorgesehen werden, so sollte diese den Gleitboden und die Zufuhrrinne in etwa mittig umfangen. In diesem Fall befindet sich dann auch die Drehachse mittig unterhalb des Gleitbodens und der Zufuhrrinne. Ist keine Halteschiene vorgesehen; so ist die Drehachse direkt mit dem Gleitboden und der Zufuhrrinne verbunden und kann nahezu beliebig unterhalb des Gleitbodens angeordnet werden. Wichtig hierbei ist nur, dass die Zufuhrrinne so gedreht werden kann, dass der sich in ihr befindliche Wurststrang in Richtung der Transportelemente der Schneidemaschine rutscht.

Des weiteren soll von der vorliegenden Erfindung umfasst sein, den Gleitboden, zusammen mit der Zufuhrrinne, und die Halteschienen fest miteinander zu verbinden. In diesem Fall könnten die Lagerbolzen auf Aussenseiten der Zufuhrrinne, welche in dafür vorgesehenen Aussparungen der Halteschienen lagern, entfallen.

Lediglich über die Drehachse besteht eine Verbindung der Halteschienen bzw. des Gleitbodens und der Zufuhrrinne zu einem Grundrahmen der Vorrichtung. Die verbleibenden Halteschienen bzw. der restliche Gleitboden mit der Zufuhrrinne liegen dem Grundrahmen lediglich auf.

Bei dem vorliegenden Ausführungsbeispiel ist eine der Halteschienen mit Querstangen verbunden, welche drehbar zwischen sich eine Auflagerolle aufnehmen. Die Auflagerolle dient der Auflage des Rauchstockes, wenn dieser in die Zufuhrrinne eingelegt wurde.

Unterhalb des Gleitbodens ist weiterhin eine Hubeinrichtung vorgesehen, welche den Gleitboden mit der Zufuhrrinne mittels einer Hubstange anhebt, um ihn so um die Drehachse drehen zu können. Die Hubeinrichtung kann pneumatisch, hydraulisch oder dergleichen angetrieben werden. Dies sowie die weitere Ausgestaltung der Hubeinrichtung ist für die Erfindung von untergeordneter Bedeutung.

Links und rechts neben der Zufuhrrinne sind dieser Abstützungen zugeordnet. Die eine Abstützung links neben der Zufuhrrinne dient, ebenso wie die oben genannte Auflagerolle, der Abstützung des Rauchstockes nach dessen Einlegen in die Zufuhrrinne. Sie weist ein an einer Kolbenstange angeordnetes Aufnahmeelement auf, welches bevorzugt U-förmig ausgebildet ist, um den Rauchstock besser aufnehmen zu können. Jedwede andere Ausgestaltung des Aufnahmeelementes bzw. der Abstützung ist jedoch denkbar und soll von der vorliegenden Erfindung umfasst sein. Ob die Kolbenstange pneumatisch, hydraulisch od. dgl. angetrieben werden kann, ist für die Erfindung von untergeordneter Bedeutung.

Die Abstützung auf der rechten Seite der Zufuhrrinne hingegen dient vorrangig dem Ausziehen des Rauchstockes aus dem Wurststrang, nachdem dieser in der Zufuhrrinne abgelegt wurde. Hierzu weist die Abstützung vorliegend bevorzugt zwei Rollen auf, welche auf nicht näher gezeigt Art und Weise an einem Arm des Grundrahmens drehbar lagernd angeordnet sind. Diese Auszugrollen sind weiter bevorzugt als Zackenrollen ausgebildet sind, um den Rauchstock besser greifen zu können. Andere Ausgestaltungen sowie Anordnungen der Rollen sind jedoch denkbar und sollen von der vorliegenden Erfindung umfasst sein. Ebenso ist die Anzahl der Rollen variabel.

Um ein Ergreifen des Rauchstockes während des Auszuges aus der Zufuhrrinne weiter zu verbessern, sind den Auszugrollen bei dem vorliegenden Ausführungsbeispiel bevorzugt zwei Klemmrollen zugeordnet, welche zu diesem Zweck auch von den Auszugrollen abgehoben werden können. Das Abheben der Klemmrollen von den Auszugrollen erfolgt ebenfalls bevorzugt pneumatisch, kann jedoch auch elektromotorisch erfolgen. Ebenfalls kann die Anzahl, die Ausgestaltung und die Anordnung der Klemmrollen in Bezug auf die Auszugrollen variabel gestaltet sein. Die unterschiedlichen Möglichkeiten sollen von der vorliegenden Erfindung umfasst sein.

Die Einrichtung ist einends der Zufuhrrinne, auf der gegenüberliegenden Seite der Abstützung, an einem Drehschlitten angeordnet, welcher von einem Antriebszylinder angetrieben wird. Sowohl der Drehschlitten als auch der Antriebszylinder sind an Führungsstangen gleitbar angeordnet. Diese sind zwischen Tragwinkel angeordnet und über die Tragwinkel mit einem Arm und über diesen mit dem Grundrahmen verbunden. Diese Anordnung kann jedoch verändert werden. So ist es durchaus denkbar, für den Gleitschlitten und den Antriebszylinder dieselbe Führungsstange zu verwenden. Der Gleitschlitten und der Antriebszylinder wären dann hintereinander an der Führungsstange angeordnet. Die unterschiedlichen Möglichkeiten der Anordnung der einzelnen Elemente zueinander sollen von der vorliegenden Erfindung umfasst sein.

Die Einrichtung selbst weist bevorzugt einen pneumatischen Zylinder mit einer Kolbenstange auf, welcher drehbar in einer vertikalen Ebene an dem Drehschlitten angeordnet ist. Dem pneumatischen Zylinder gegenüberliegend ist an der Kolbenstange in einem Ausführungsbeispiel ein Saugbalken angeordnet, an dem sich zumindest eine, bevorzugt jedoch eine Mehrzahl von Saugdüsen befinden, welche dem Ansaugen von bevorzugt der ersten Wurst des Wurststranges dienen. Auch hier ist denkbar, die Kolbenstange durch einen hydraulischen Zylinder od. dgl. anzutreiben.

Darüber hinaus ist denkbar, den Saugbalken mit seinen Saugdüsen direkt an dem Drehschlitten drehbar anzuordnen, so dass der pneumatische Zylinder entfällt. Wichtig hierbei ist nur, dass der Drehschlitten an den Führungsstangen soweit in Richtung der Zufuhrrinne verfahren werden kann, dass die Saugdüsen die erste Wurst des Wurststranges in der Zufuhrrinne ansaugen können. Darüber hinaus muss der Drehschlitten an den Führungsstangen derart von der Zufuhrrinne entfernt verfahren werden können, dass der Saugbalken mit den Saugdüsen gedreht werden kann, um die erste Wurst bzw. den Wurststrang den Transportelementen der Schneidemaschine zuführen zu können.

Weiterhin ist denkbar, nur den Saugbalken mit seinen Saugdüsen schwenkbar auszugestalten. Das würde bedeuten, dass zwischen dem Saugbalken und der Kolbenstange eine Schwenkachse ausgebildet ist. Ferner wären der pneumatische Zylinder und die Kolbenstange vertikal und fest an dem Drehschlitten angeordnet und der Drehschlitten nicht nur vertikal, sondern auch horizontal verfahrbar ausgestaltet. Somit würde der Drehschlitten den Saugbalken mit seinen Saugdüsen in Richtung der ersten Wurst des Wurststranges in der Zufuhrrinne verfahren. Dort saugen die Saugdüsen die erste Wurst an. Anschliessend verfährt der Drehschlitten den Saugbalken und die Saugdüsen mit der ersten Wurst und dem daran hängenden Wurststrang aus der Zufuhrrinne.

Sobald sich der Saugbalken und die Saugdüsen ausserhalb der Zufuhrrinne befinden, wird der Saugbalken nach unten verfahren. Oberhalb der Transportelemente der Schneidemaschine wird der Saugbalken mit den Saugdüsen um etwa 90° um die Schwenkachse geschwenkt und kann nun die Wurst bzw. den Wurststrang den Transportelementen der Schneidemaschine zuführen.

Anstelle einer Saugeinrichtung kann auch eine beliebige andere Einrichtung zum Erfassen von zumindest einer Wurst des Wurststranges vorgesehen werden. In einem mechanischen Ausführungsbeispiel ist daran gedacht, eine Greifeinrichtung vorzusehen, wobei sich an einer entsprechenden scherenartigen Anordnung zweier Halbschalen befinden. Diese Halbschalen können zueinander und voneinander weg bewegt werden, so dass durch diese Halbschale die Wurst erfasst werden kann. Wie gesagt sollen, im Rahmen der Erfindung auch noch weitere Ausführungsbeispiele liegen.

Die unterschiedlichen Möglichkeiten der Ausgestaltung sowie der Anordnung der einzelnen Elementen sollen von der vorliegenden Erfindung umfasst sein. Wichtig ist, dass der Wurststrang auf möglichst einfache Weise schlussendlich zu der Schneidemaschine gelangt, wo er in einzelne Würste aufgeteilt wird, Gleichzeitig kann der nun leere Rauchstock aus der Zufuhrrinne entfernt werden, ohne die Zuführung eines neuen Rauchstockes mit einem weiteren Wurststrang zu stören.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine Seitenansicht einer erfindungsgemässen Vorrichtung zum Zuführen eines Wurststranges zu einer Schneidemaschine mit Zufuhreinrichtung, Saugeinrichtung und Abstützungen mit Klemmrollen;
Figur 2 eine Seitenansicht der Abstützungen mit zugeordneten Klemmrollen in geöffneter Lage.

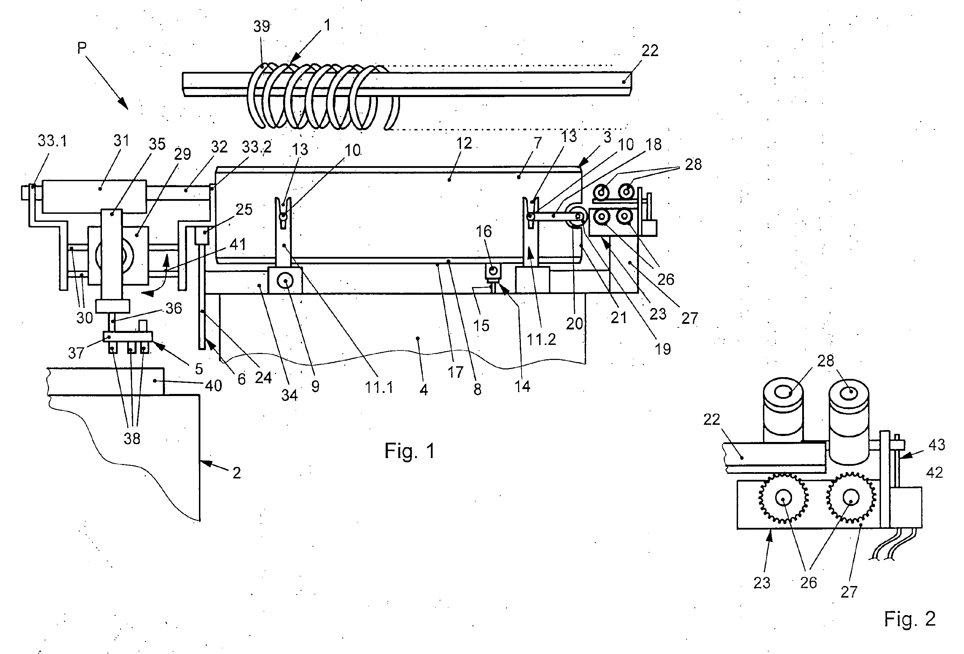

Gemäss Figur 1 weist eine Vorrichtung P zum Zuführen eines Wurststranges 1 zu einer Schneidemaschine 2 eine Zufuhreinrichtung 3 an einem Grundrahmen 4, eine Saugeinrichtung 5 sowie zumindest eine Abstützung 6 bzw. 23 auf.

Die Zufuhreinrichtung 3 besitzt eine Zufuhrrinne 7 auf, welche querschnittlich V-förmig ausgestaltet und auf einem Gleitboden 8 aufgesetzt ist. Der Gleitboden 8 soll das Gleiten des Wurststranges 1 erleichtern, insbesondere dann, wenn die Zufuhrrinne 7 um eine aussermittig angeordnete Drehachse 9 gedreht wird.

Der Gleitboden 8 und die Zufuhrrinne 7 sind lösbar über Lagerbolzen 10 in bevorzugt zwei Halteschienen 11.1 und 11.2 eingehängt, welche den Gleitboden 8 mit der darauf aufgesetzten Zufuhrrinne 7 U-förmig umfangen. Die Lagerbolzen 10 sind jeweils auf einer Aussenseite 12 der Zufuhrrinne 7 angeordnet und greifen in, ebenfalls U-förmig ausgebildete, Aussparungen 13 der Halteschienen 11.1 und 11.2 ein.

Von den beiden U-förmigen Halteschienen 11.1 und 11.2 ist die Halteschiene 11.1 über die Drehachse 9 mit dem Grundrahmen 4 verbunden. Die andere Halteschiene 11.2 ist nicht mit dem Grundrahmen 4 verbunden, sondern liegt diesem lediglich auf.

In der Nähe dieser Halteschiene 11.2 ist eine Hubeinrichtung 14 vorgesehen, welche eine Hubstange 15 aufweist, die beim Anheben des Gleitbodens 8 mit der Zufuhrrinne 7 um einen Drehbolzen 16 dreht, welcher auf einer Unterseite 17 des Gleitbodens 8 angeordnet ist. Um den Gleitboden 8 sowie die Zufuhrrinne 7 anheben zu können, ist die Hubstange 15 mit einem nicht näher gezeigten pneumatischen Zylinder in oder an dem Grundrahmen 4 verbunden.

Mit der Halteschiene 11.2 sind weiterhin Querstangen 18 verbunden, welche drehbar zwischen sich eine Auflagerolle 19 aufnehmen. Die Auflagerolle 19 ragt in eine Ausnehmung 20 in einem Randbereich 21 der Zufuhrrinne 7 ein und dient der Auflage eines Rauchstockes 22, auf welchen der Wurststrang 1 aufgewickelt ist.

Links und rechts neben der Zufuhrrinne 7 sind dieser die Abstützungen 6 und 23 zugeordnet. Die Abstützung 6 dient, ebenso wie die Auflagerolle 19, der Abstützung des Rauchstockes 22, an welchem sich der Wurststrang 1 befindet. Die Abstützung 6 weist ein an einer Kolbenstange 24 angeordnetes Aufnahmeelement 25 auf, welches U-förmig ausgebildet ist, um den Rauchstock 22 besser aufnehmen zu können. Die Kolbenstange 24 selbst kann zu einem nicht näher gezeigten pneumatischen Zylinder führen, welcher in oder an dem Grundrahmen 4 angeordnet ist. Sie kann aber auch ortsfest mit dem Grundrahmen verbunden sein.

Die Abstützung 23 hingegen dient vorrangig dem Ausziehen des Rauchstockes 22 aus dem Wurststrang 1, nachdem dieser in der Zufuhrrinne 7 abgelegt wurde. Hierzu weist die Abstützung 23 vorliegend bevorzugt zwei Rollen 26 auf, welche auf nicht näher gezeigt Art und Weise an einem Arm 27 des Grundrahmens 4 drehbar lagernd angeordnet sind. Diese Auszugrollen 26 sind weiter bevorzugt als Zackenrollen ausgebildet.

Um den Rauchstock 22 während des Auszuges aus der Zufuhrrinne 7 besser halten zu können, sind den Auszugrollen 26 vorliegend bevorzugt zwei Klemmrollen 28 zugeordnet. Diese Klemmrollen 28 sind so ausgebildet, dass sie von den Auszugrollen 26 abgehoben werden können, wie das in Figur 2 näher dargestellt ist. Dies ermöglicht das Einführen des Rauchstockes 22 mit dem Wurststrang 1 in die Zufuhrrinne 7 bei gleichzeitiger Auflage auf die Auszugsrollen 26. Das Abheben der Klemmrollen 28 erfolgt über einen Motor 42 oder entsprechenden Pneumatikzylinder und ein Drehgestänge 43.

Die Saugeinrichtung 5 ist einends der Zufuhrrinne 7 auf der gegenüberliegenden Seite der Abstützung 23 an einem Drehschlitten 29 angeordnet. Der Drehschlitten 29 wiederum ist an Führungsstangen 30 gleitbar angeordnet und wird über einen Antriebszylinder 31 linear angetrieben. Sowohl die Führungsstangen 30 für den Drehschlitten 29, als auch eine Führungsstange 32 für den Antriebszylinder 31 sind zwischen Verbindungselementen 33 angeordnet und über die Tragwinkeln 33.1 und 33.2 mit einem Arm 34 und über diesen mit dem Grundrahmen 4 verbunden.

Die Saugeinrichtung 5 weist einen pneumatischen Zylinder 35 mit einer Kolbenstange 36 auf, welcher drehbar in einer vertikalen Ebene an dem Drehschlitten 29 angeordnet und bevorzugt in Richtung eines Doppelpfeils 41 drehbar ist.

Dem pneumatischen Zylinder 35 gegenüberliegend ist an der Kolbenstange 36 ein Saugbalken 37 angeordnet, an dem sich zumindest eine, bevorzugt jedoch eine Mehrzahl von Saugdüsen 38 befinden, welche dem Ansaugen von bevorzugt der ersten Wurst 39 des Wurststranges 1 dienen.

### Die Funktionsweise der vorliegenden Erfindung ist folgende:

Der Wurststrang 1 wird, an dem Rauchstock 22 hängend, von einer zuvor durchlaufenen Bearbeitungsstation, beispielsweise einem Rauchwagen, auf nicht näher gezeigte Weise angeliefert. Über der Zufuhrrinne 7 wird der Rauchstock 22 mit dem Wurststrang 1 abgelassen, bis die jeweiligen Enden des Rauchstockes 22 auf den Abstützungen 6 und 23 sowie der Auflagerolle 19 aufliegen. Die Abstützung 6 ist hierzu mittels des pneumatischen Zylinders nach oben verfahren worden und befindet sich etwa in Höhe der Abstützung 23 bzw. der Auflagerolle 19. Die Würste des Wurststranges 1 befindet sich in einer in etwa vertikal angeordneten Stellung in der Zufuhrrinne 7.

Anschliessend wird die Saugeinrichtung 5 in Stellung gebracht. Das bedeutet, dass der zunächst vertikal angeordnete pneumatische Zylinder 35 der Saugeinrichtung 5 an dem Drehschlitten 29 um etwa 90° in eine waagerechte Stellung bewegt wird. Anschliessend wird der Drehschlitten 29, welcher sich zunächst am linken Ende der Führungsstangen 30 befunden hat, an den Führungsstangen 30 nach rechts verfahren, angetrieben von dem Antriebszylinder 31, welcher sich dadurch ebenfalls an seiner Führungsstange 32 nach rechts bewegt. Gleichzeitig mit der Bewegung des Antriebszylinders 31 und damit des Drehschlittens 29 nach rechts, wird die Kolbenstange 36 des pneumatischen Zylinders 35 und damit der Saugbalken 37 mit seinen Saugdüsen 38 aus und in die Zufuhrrinne 7 eingefahren.

Der Rauchstock 22 befindet zu diesem Zeitpunkt entweder noch in der Zufuhrrinne 7 und liegt somit noch auf den Abstützungen 6 und 23 bzw. der Auflagerolle 19 auf. Die Kolbenstange 36 bzw. der Saugbalken 37 mit den Saugdüsen 38 fährt an der Abstützung 6 vorbei in die Zufuhrrinne 7 ein. Oder aber der Rauchstock 22 wurde bereits automatisch aus der Zufuhrrinne 7 entfernt, so dass die Abstützung 6 bereits wieder in ihre Ausgangsstellung zurückgefahren werden konnte. Beide Möglichkeiten sind denkbar.

Um den Rauchstock 22 aus der Zufuhrrinne 7 und damit aus dem Wurststrang 1 entfernen zu können, werden die Klemmrollen 28 auf die Auszugrollen 26 gesenkt. Da die Auszugrollen 26 vorzugsweise als Zackenrollen ausgebildet sind, wird der Rauchstock 22 zwischen den Klemmrollen 28 und den Auszugrollen 26 besonders gut gehalten und kann während des nun folgenden automatischen Ausziehens nicht von den Rollen 26 und 28 abrutschen. Ein Antrieb der Klemmrollen 28 bzw. der Auszugrollen 26 kann ebenfalls auf pneumatische Art und Weise erfolgen. Andere Möglichkeiten sind jedoch denkbar.

Nachdem der Saugbalken 37 mit seinen Saugdüsen 38 in die Zufuhrrinne 7 eingefahren wurde, saugen die Saugdüsen 38 die erste Wurst 39 an, welche in der Zufuhrrinne 7 in einer etwa vertikal aufgerichteten Stellung angeordnet ist.

Anschliessend wird die Kolbenstange 36 wieder eingefahren und damit der Saugbalken 37 mit seinen Saugdüsen 38 und der daran haftenden Wurst 39 aus der Zufuhrrinne 7 gezogen. Gleichzeitig wird auch der Drehschlitten 29 mittels des Antriebszylinders 31 an seinen Führungsstangen 30 wieder nach links verfahren, wobei der Antriebszylinder 31 ebenfalls an seiner Führungsstange 32 nach links verfährt.

Befinden sich insbesondere die Saugdüsen 38 mit der Wurst 39 wieder ausserhalb der Zufuhrrinne 7, so kann der pneumatische Zylinder 35 an dem Drehschlitten 29 wieder um etwa 90° in Richtung des Pfeils 41 nach unten in seine Ausgangsstellung bewegt werden. Die Wurst 39 bzw. der restliche Wurststrang 1 werden auf diese Weise ein Stück aus der Zufuhrrinne 7 gezogen.

Die von den Saugdüsen 38 angesaugte erste Wurst 39 befindet sich unmittelbar über unterhalb der Saugeinrichtung 5 angeordneten Transportelemente 40, beispielsweise zwei gegenläufige Transportbänder der Schneidemaschine 2. Der Saugbalken 37 mit der Wurst 39 wird nach unten bewegt und der Sog der Saugdüsen 38 der Saugeinrichtung 5 aufgehoben. Die Wurst 39 wird in den Zwischenraum zwischen die Transportbänder der Schneidemaschine 2 gedrückt, welche die Wurst 39 erfassen und weitertransportieren in Richtung einer nicht näher gezeigten Schneideinrichtung. Mit Weitertransport der ersten Wurst 39 wird auch der restliche Wurststrang 1 nach und nach ergriffen und dieser Schneideinrichtung zugeführt, wo der Wurststrang 1 in einzelne Würste aufgeteilt wird. Anschliessend kann ein neuer Rauchstock mit einem weiteren Wurststrang der Zufuhrrinne 7 zugeführt werden und die oben genannten Abläufe wiederholen sich.

**Bezugszeichenliste**

| | | | | | |
|---|---|---|---|---|---|
| 1 | Wurststrang | 34 | Arm | 67 | |
| 2 | Schneidemaschine | 35 | pneum. Zylinder | 68 | |
| 3 | Zufuhreinrichtung | 36 | Kolbenstange | 69 | |
| 4 | Grundrahmen | 37 | Saugbalken | 70 | |
| 5 | Saugeinrichtung | 38 | Saugdüse | 71 | |
| 6 | Abstützung | 39 | Wurst | 72 | |
| 7 | Zufuhrrinne | 40 | Transportelement | 73 | |
| 8 | Gleitboden | 41 | Pfeil | 74 | |
| 9 | Drehachse | 42 | Motor | 75 | |
| 10 | Lagerbolzen | 43 | Drehgestänge | 76 | |
| 11 | Halteschienen | 44 | | 77 | |
| 12 | Aussenseite | 45 | | 78 | |
| 13 | Aussparung | 46 | | 79 | |
| 14 | Hubeinrichtung | 47 | | | |
| 15 | Hubstange | 48 | | | |
| 16 | Drehbolzen | 49 | | | |
| 17 | Unterseite | 50 | | | |
| 18 | Querstange | 51 | | P | Vorrichtung |
| 19 | Auflagerolle | 52 | | | |
| 20 | Ausnehmung | 53 | | | |
| 21 | Randbereich | 54 | | | |
| 22 | Rauchstock | 55 | | | |
| 23 | Abstützung | 56 | | | |
| 24 | Kolbenstange | 57 | | | |
| 25 | Aufnahmeelement | 58 | | | |
| 26 | Rollen | 59 | | | |
| 27 | Arm | 60 | | | |
| 28 | Klemmrollen | 61 | | | |
| 29 | Drehschlitten | 62 | | | |
| 30 | Führungsstange | 63 | | | |
| 31 | Antriebszylinder | 64 | | | |
| 32 | Führungsstange | 65 | | | |
| 33 | Tragwinkel | 66 | | | |

## Patentansprüche

1. Verfahren zum Zuführen eines Wurststranges (1) zu einer Schneidemaschine (2), in welcher der Wurststrang (1) in einzelne Würste aufgeteilt wird,
**dadurch gekennzeichnet,**
**dass** der Wurststrang (1) in eine Zufuhrrinne (7) eingelegt und bevorzugt die erste Wurst (39) von einer Einrichtung (5) ergriffen und Transportelementen (40) der Schneidemaschine (2) zugeführt wird.

2. Verfahren nach Anspruch 1, **dadurch gekennzeichnet, dass** die erste Wurst (39) in der Zufuhrrinne (7) etwa vertikal aufgerichtet angeordnet wird.

3. Verfahren nach Anspruch 1 oder 2, **dadurch gekennzeichnet, dass** der Wurststrang (1) um einen Rauchstock (22) gewickelt der Zufuhrrinne (7) zugeführt wird.

4. Verfahren nach Anspruch 3, **dadurch gekennzeichnet, dass** der Rauchstock (22) nach dem Ablegen des Wurststranges (1) in der Zufuhrrinne (7) automatisch aus dem Wurststrang (1) entfernt wird.

5. Vorrichtung zum Zuführen eines Wurststranges (1) zu einer Schneidemaschine (22), in welcher der Wurststrang (1) in einzelne Würste aufteilbar ist, **dadurch gekennzeichnet, dass** der Schneidemaschine (2) eine Zufuhreinrichtung (3) zugeordnet ist, in welcher sich eine Einrichtung (5) zum Aufnehmen von bevorzugt der ersten Wurst (39) des Wurststranges (1) befindet, der in der Zufuhreinrichtung (3) abgelegt ist, wobei die Einrichtung (5) zu der Schneidemaschine (2) hin bewegbar ist.

6. Vorrichtung nach Anspruch 5, **dadurch gekennzeichnet, dass** die Zufuhreinrichtung (3) eine Zufuhrrinne (7) aufweist, in welche der Wurststrang (1) ablegbar ist.

7. Vorrichtung nach Anspruch 6, **dadurch gekennzeichnet, dass** die Zufuhrrinne (7) querschnittlich V-förmig ausgestaltet und auf einem Gleitboden (8) aufgesetzt ist.

8. Vorrichtung nach Anspruch 6 oder 7, **dadurch gekennzeichnet, dass** die Zufuhrrinne (7) um eine aussermittig angeordnete Drehachse (9) drehbar ist.

9. Vorrichtung nach einem der Ansprüche 6 bis 8, **dadurch gekennzeichnet, dass** die Einrichtung (5) der Zufuhrrinne (7) zugeordnet ist.

10. Vorrichtung nach Anspruch 9, **dadurch gekennzeichnet, dass** die Einrichtung (5) an einem Drehschlitten (29) angeordnet ist.

11. Vorrichtung nach wenigstens einem der Ansprüche 5 bis 10, **dadurch gekennzeichnet, dass** sich zumindest eine Mehrzahl von Saugdüsen (38) an einem Saugbalken (37) befinden, der an einer Kolbenstange (36) eines pneumatischen Zylinders (35) angeordnet ist.

12. Vorrichtung nach Anspruch 11, **dadurch gekennzeichnet, dass** eine Greifeinrichtung, bspw. zwei Halbschalen aufweisend, an einem pneumatischen Zylinder angeordnet ist.

13. Vorrichtung nach Anspruch 11 oder 12, **dadurch gekennzeichnet, dass** der pneumatische Zylinder (35) drehbar in einer vertikalen Ebene an dem Drehschlitten (29) angeordnet ist.

14. Vorrichtung nach einem der Ansprüche 10 bis 13, **dadurch gekennzeichnet, dass** der Drehschlitten (29) an Führungsstangen (30) gleitbar angeordnet ist.

15. Vorrichtung nach Anspruch 14, **dadurch gekennzeichnet, dass** dem Drehschlitten (29) ein Antriebszylinder (31) zugeordnet ist.

16. Vorrichtung nach wenigstens einem der Ansprüche 6 bis 15, **dadurch gekennzeichnet, dass** der Zufuhrrinne (7) links und rechts eine Abstützung (6, 23) für einen Rauchstock (22) zugeordnet ist, an dem sich der Wurststrang (1) befindet.

17. Vorrichtung nach Anspruch 16, **dadurch gekennzeichnet, dass** zumindest eine Abstützung (23) Rollen (26) aufweist, welche dem Ausziehen des Rauchstockes (22) aus dem Wurststrang (1) nach dem Ablegen in der Zufuhrrinne (7) dienen.

18. Vorrichtung nach Anspruch 17, **dadurch gekennzeichnet, dass** der/den Auszugrolle/n (26) Klemmrollen (28) zugeordnet sind.

19. Vorrichtung nach Anspruch 18, **dadurch gekennzeichnet, dass** die Klemmrolle/n (28) von der/den Auszugrolle/n (26) abhebbar ist/sind.

20. Vorrichtung nach Anspruch 18 oder 19, **dadurch gekennzeichnet, dass** die Auszugrolle/n (26) Zackenrolle/n ist/sind.
